# FASCICULE DE BREVET EUROPEEN

(11) **EP 2 854 694 B1**
(45) Date de publication et mention de la délivrance du brevet: **29.04.2020**
(21) Numéro de dépôt: 13727142.5
(22) Date de dépôt: 04.06.2013
(51) Int. Cl.: A61C 1/12, A61C 1/14, A61C 5/40

(54) **PIECE A MAIN POUR TRAITEMENT ENDODONTIQUE**
HANDSTÜCK FÜR EINE ENDODONTISCHE BEHANDLUNG
HANDPIECE FOR ENDODONTIC TREATMENT

(30) Priorité: 05.06.2012 FR 1255232
(43) Date de publication de la demande: 08.04.2015
(73) Titulaire: Itena Clinical, 75016 Paris (FR)
(72) Inventeur: SIMON, Stéphane, F-76000 Rouen (FR)
(74) Mandataire: Novaimo
(86) Numéro de dépôt international: PCT/EP2013/061495
(87) Numéro de publication internationale: WO 2013/182563

(56) Documents cités:
- FR-A1- 2 466 236
- JP-A- 2004 313 659
- US-A- 5 725 370
- US-A1- 2009 042 163
- US-A1- 2010 092 922

## Description

La présente invention se rapporte à une pièce à main pour traitement dentaire, plus particulièrement pour traitement endodontique, ainsi qu'à un embout particulier adapté pour une telle pièce à main.

L'endodontie concerne le traitement des canaux dentaires. Pour ce traitement, des instruments ont été développés, qui permettent de nettoyer les canaux en enlevant notamment la pulpe et les bactéries qui s'y trouvent. Ces instruments ont aussi pour fonction de mettre en forme les canaux, en général selon une forme conique, qui peut ainsi avantageusement être obturé avec un matériau plastique ultérieurement lorsque ce traitement endodontique est terminé. Avec la seule instrumentation du canal, la désinfection n'est pas suffisante, ce qui se manifeste par des infections récurrentes et le développement de maladies osseuses associées. Pour être efficace, cette instrumentation du canal doit nécessairement être associée à une désinfection chimique qui est assurée par l'utilisation d'une solution d'irrigation désinfectante. C'est cette association de l'instrumentation et de l'irrigation du canal qui permet d'obtenir une désinfection complète et la prévention des maladies osseuses associées. Cette irrigation est assurée par le renouvellement de solutions injectées dans le canal avec une aiguille dédiée. Pour optimiser son efficacité, il est conseillé d'activer cette solution par une agitation mécanique. A ce jour, ces deux étapes sont mises en œuvre par une utilisation alternée de deux appareils distincts. L'inconvénient de cette approche est son coût global, et le manque d'ergonomie des procédures, car elle nécessite des dispositifs complexes complémentaires pour sa mise en œuvre.

Pour améliorer le caractère ergonomique du protocole d'irrigation, le document EP1743593 ainsi que le document US2009/0042163 décrivent une pièce à main de forme adaptée à une manipulation manuelle conviviale pour un praticien, qui est apte à mettre en vibration sonique un embout destiné à pénétrer dans les canaux dentaires pour activer une solution d'irrigation préalablement répandue dans ces canaux, généralement une solution d'hypochlorite de sodium ou d'EDTA, favorable à la désinfection. Cette pièce à main est donc spécialisée pour une phase particulière du traitement, et cherche à déclencher un phénomène d'activation mécanique au sein des canaux pour favoriser l'action de la solution d'irrigation, sans endommager les parois de ces canaux.

Le but de l'invention est de proposer une solution pour réaliser un traitement endodontique performant, sans risque de réinfection future, convivial, et simplifié.

A cet effet, l'invention repose sur une pièce à main pour traitement endodontique, comme définie dans la revendication 1.

La pièce à main est plus particulièrement définie par les revendications dépendantes.

L'embout peut être creux sur au moins une partie de sa longueur de sorte à pouvoir former un conduit pour une solution d'irrigation provenant d'un réservoir de la pièce à main.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue en perspective de côté d'une pièce à main selon un mode de réalisation de l'invention.
La figure 2 représente une vue en perspective de côté de la partie arrière de la pièce à main comprenant un réservoir selon le mode de réalisation de l'invention.
La figure 3 représente une vue en perspective du réservoir de la pièce à main selon le mode de réalisation de l'invention.
La figure 4 représente une vue en perspective de la partie avant du réservoir de la pièce à main selon le mode de réalisation de l'invention.
La figure 5 représente une vue en perspective de la trappe du réservoir de la pièce à main selon le mode de réalisation de l'invention.
La figure 6 représente une vue en perspective de l'intérieur du réservoir de la pièce à main selon le mode de réalisation de l'invention.
La figure 7 représente une vue en perspective d'un conduit d'irrigation de la pièce à main participant à la fonction de pompage selon le mode de réalisation de l'invention.
La figure 8 représente une vue en perspective d'un joint à bec de canard utilisé au niveau d'un conduit d'irrigation de la pièce à main selon le mode de réalisation de l'invention.
La figure 9 représente une vue en perspective d'une partie du dispositif de pompage du dispositif d'irrigation de la pièce à main selon le mode de réalisation de l'invention.
Les figures 10 et 22 représentent une vue en perspective du mécanisme de pompage du dispositif d'irrigation de la pièce à main selon le mode de réalisation de l'invention.
La figure 11 représente une vue de dessus du mécanisme de pompage du dispositif d'irrigation de la pièce à main selon le mode de réalisation de l'invention.
La figure 12 représente une vue des boutons de commande de la pièce à main selon le mode de réalisation de l'invention.
La figure 13 représente une vue intérieure de la pièce à main montrant le fonctionnement des boutons de commande selon le mode de réalisation de l'invention.
La figure 14 représente une vue en perspective de côté d'une pièce à main et de son conduit d'irrigation selon le mode de réalisation de l'invention.
La figure 15 représente une vue en perspective du flux d'irrigation au niveau de la tête de la pièce à main selon le mode de réalisation de l'invention.
Les figures 16 et 23 représentent une vue en perspective de la pièce à main montrant le mécanisme du dispositif d'agitation selon le mode de réalisation de l'invention.
La figure 17 représente une vue en perspective du mécanisme du dispositif d'agitation de la pièce à main selon le mode de réalisation de l'invention.
La figure 18 représente une vue en perspective d'un composant de liaison du mécanisme du dispositif d'agitation de la pièce à main selon le mode de réalisation de l'invention.
La figure 19 représente une vue en perspective de la partie du dispositif d'agitation disposée au niveau de la tête de la pièce à main selon le mode de réalisation de l'invention.
La figure 20 représente une vue de côté d'un embout de la pièce à main selon le mode de réalisation de l'invention.
La figure 21 représente une vue en coupe de côté d'un embout de la pièce à main selon le mode de réalisation de l'invention.
La figure 24 représente une poche souple formant un réservoir de la pièce à main selon une variante du mode de réalisation de l'invention.
Les figures 25a à 25c illustrent trois étapes d'une fixation d'un embout sur la pièce à main selon une variante du mode de réalisation de l'invention.

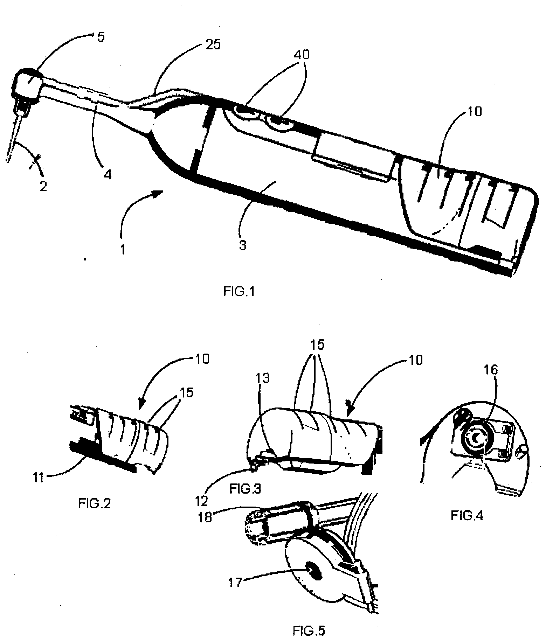

La pièce à main 1 selon le mode de réalisation de l'invention, illustrée sur la figure 1, réunit dans un même outil la fonction d'irrigation et la fonction d'agitation de la solution d'irrigation canalaire. Elle se présente en deux parties. Une première partie arrière comprend un corps principal 3 qui s'étend sur sensiblement les deux tiers de sa longueur, présente une forme extérieure arrondie, sensiblement cylindrique, inscrite dans un cylindre de diamètre inférieur ou égal à 5 cm. Une seconde partie avant plus étroite, dont le diamètre est inférieur ou égal à 4 cm, forme un bras 4 de liaison vers une tête 5, qui comprend une connexion pour un embout 2, qui s'étend dans une direction sensiblement perpendiculaire à l'axe de la première partie. Ce bras 4 est destiné à positionner l'embout 2 dans la bouche d'un patient, au sein d'un canal dentaire, ce qui est favorisé par sa forme fine et allongée. Dans son ensemble, cette pièce à main 1 présente une forme ergonomique, facile à manipuler, similaire au format d'une brosse à dent électrique. Pour simplifier la suite de la description nous appellerons « direction longitudinale » une direction parallèle à l'axe du corps principal 3 de la pièce à main, aussi sensiblement parallèle au bras 4 dans ce mode de réalisation, et nous choisirons par convention une orientation de la pièce à main de sorte que l'avant corresponde à la tête 5 de la pièce à main.

Ainsi, la pièce à main 1 comprend d'abord un dispositif d'irrigation. Pour cela, elle comprend un réservoir 10 pour contenir la réserve de solution d'irrigation, un dispositif de pompage et d'éjection qui permet de conduire la solution d'irrigation depuis ce réservoir jusque dans le canal, par l'intermédiaire d'un embout 2. Ensuite, elle comprend aussi un dispositif d'agitation permettant la mise en mouvement d'un embout 2 destiné à agiter la solution d'irrigation présente dans un canal dentaire. Ces différents dispositifs complémentaires vont maintenant être détaillés.

Le réservoir 10 de la pièce à main 1 est fixé de manière amovible en partie arrière du corps principal 3. Comme cela apparaît sur les figures 2 et 3, ce réservoir est fixé par embéquetage mécanique 11 et/ou clipage mécanique 12. Il comprend de plus un décroché 13 qui permet son centrage lors de sa fixation sur la pièce à main. Dans ce mode de réalisation, il est amovible et rechargeable. Pour cela, il comprend une trappe de remplissage 16 dans sa partie avant, comme représenté par la figure 4. La figure 5 illustre une telle trappe 16, qui intègre sur sa surface une pastille 17 microporeuse, adaptée pour laisser passer l'air mais pas la solution d'irrigation, pour former une entrée d'air vers le réservoir qui permet de compenser le vide laissé par la solution d'irrigation après son éjection par un tuyau de sortie 18, et permettre ainsi le maintien de la pression intérieure du réservoir 10. En variante, le réservoir peut ne pas être amovible, et être simplement rechargé directement sur la pièce à main.

En variante, le réservoir peut être amovible et à usage unique, changé après chaque utilisation de la pièce à main, pour garantir la stérilisation, l'hygiène du procédé.

En variante, le réservoir 10 pourrait être fixé par tout moyen au corps principal. Sa surface supérieure, visible par le praticien, est transparente ou comprend des zones transparentes, et comprend des graduations 15, qui permettent au praticien de visualiser et connaître la quantité de solution d'irrigation restante. En variante, la surface du réservoir 10 peut présenter un traitement anti UV ou anti lumière.

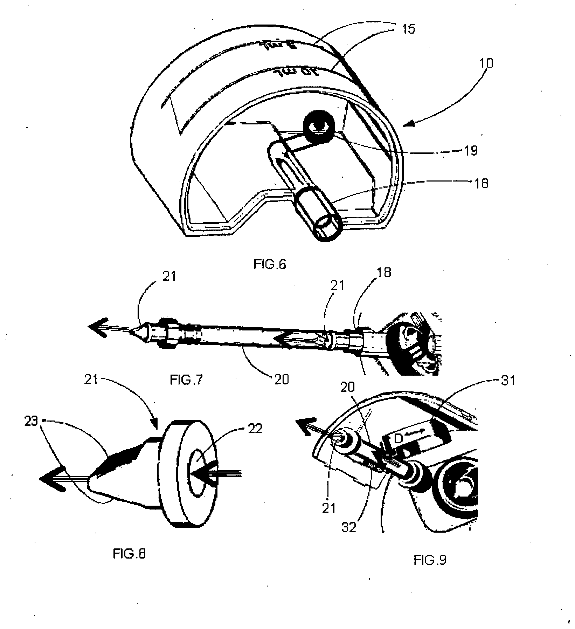

De plus, selon ce mode de réalisation, le tuyau de sortie 18 du réservoir prolonge une partie interne au réservoir 10, comme cela est représenté sur la figure 6. Un problème technique se pose de permettre l'envoi continu de la solution dans toutes les positions du praticien et donc toutes les orientations de la pièce à main et de son réservoir 10, pour garantir une irrigation constante d'un canal dentaire en cours de traitement. Pour cela, au moins une partie du tuyau à l'intérieur du réservoir est dans un matériau très flexible, et lestée par un poids 19 qui permet de le maintenir en bas dans toutes les orientations de la pièce à main, et par conséquent de maintenir son extrémité au sein de la solution d'irrigation. En variante, plusieurs tuyaux dont les extrémités seraient disposées à différents endroits du réservoir 10 pourraient être utilisés.

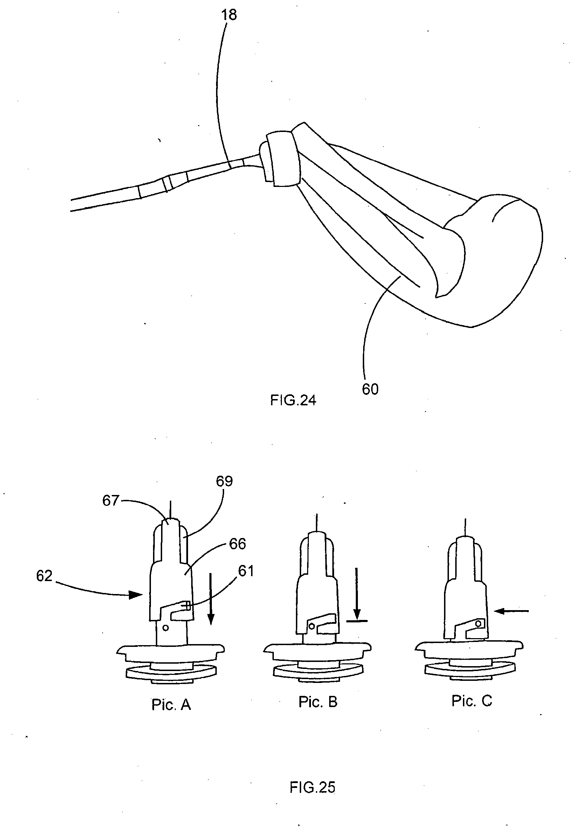

En variante, le réservoir 10 peut intégrer une poche souple 60 déformable, comme représentée par la figure 24 à titre d'exemple, qui comprend la solution d'irrigation. Avec une telle réalisation, la poche souple 60 se déforme au fur et à mesure de la consommation de la solution d'irrigation, et son volume intérieur correspond toujours à celui de la solution d'irrigation présente dans la poche. Une telle poche souple 60 ne comprend donc jamais d'air, est étanche à l'air, mais contient seulement la solution d'irrigation sous vide, et permet de garantir l'immersion de la zone d'aspiration dans toutes les orientations de la pièce à main et quel que soit le volume de solution stockée dans la poche. Cette poche peut se présenter en tout matériau souple, comme un silicone ou en polyuréthane. Son remplissage peut se faire à l'aide d'une seringue. En variante, la poche souple est amovible et jetable. Elle peut être changée après chaque utilisation.

La figure 7 illustre un conduit 20 immédiatement relié au tuyau de sortie 18 du réservoir. Ce conduit 20 s'étend dans une direction sensiblement longitudinale. Il est équipé au niveau de ses deux extrémités d'un bec de canard 21, formant un joint, plus précisément représenté sur la figure 8, qui permet l'orientation du flux dans un seul sens. La solution d'irrigation entre par une première extrémité circulaire 22, et ressort par la seconde extrémité formant deux lèvres 23.

D'autre part, un dispositif de pompage est prévu pour acheminer la solution d'irrigation depuis le réservoir 10 vers l'extrémité avant de la pièce à main. Dans ce mode de réalisation, ce dispositif de pompage est directement formé à partir du conduit 20 qui se présente dans un matériau déformable et par le biais d'un galet mobile 31, visible sur la figure 9. Plus précisément, une portion du conduit 20 est positionnée entre un galet mobile 31 et un appui rigide 32 du corps mobile. Une simple pression sur le galet mobile 31 lui permet de venir écraser le conduit 20 contre l'appui rigide 32, ce qui créée une surpression dans le conduit 20 du fait de sa déformation, suffisante pour l'expulsion d'au moins une partie de la solution qu'il contient vers l'avant de la pièce à main, dans l'unique direction d'écoulement autorisée par les becs de canard 21 mentionnés précédemment. Ensuite, lorsque le galet mobile retrouve sa position initiale dans laquelle il n'écrase pas le conduit 20, ce dernier retrouve son volume initial non écrasé, ce qui s'accompagne d'une aspiration de la solution depuis le réservoir 10 jusque dans ce conduit 20, afin de maintenir en permanence une quantité de solution suffisante dans le conduit 20 pour une prochaine expulsion.

Un tel dispositif de pompage est donc réalisé par la coopération d'une portion du conduit 20 délimitée par deux joints particuliers et d'un dispositif d'écrasement de cette portion de conduit 20. Ce dispositif d'écrasement comprend un galet mobile 31. Il comprend de plus un moteur 35 d'irrigation et un mécanisme intermédiaire reliant ce moteur au galet mobile, afin de permettre la mise en mouvement du galet mobile 31 successivement entre ses deux positions extrêmes, une première position pour écraser le conduit 20 puis une seconde pour relâcher cet écrasement.

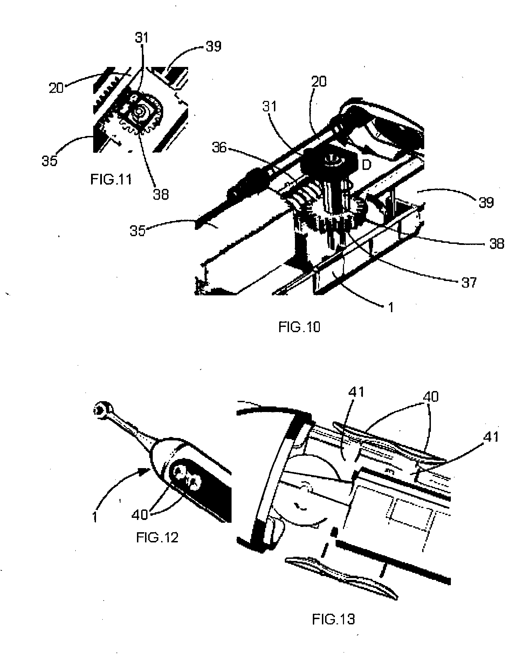

Les figures 10, 22 et 11 illustrent plus particulièrement ce mécanisme intermédiaire selon le mode de réalisation. Une vis sans fin 36 qui s'étend dans une direction sensiblement longitudinale au sein du corps principal de la pièce à main est disposée en sortie du moteur 35 d'irrigation. Elle coopère avec une roue 37 mobile en rotation autour d'un axe sensiblement perpendiculaire à la direction longitudinale, qui comprend un axe excentré 38 s'étendant parallèlement à cet axe de rotation. L'extrémité de cet axe 38 coopère avec une lumière disposée à l'intérieur du galet mobile 31. Comme cet axe 38 est excentré, la rotation de la roue 37 lui permet la mise en mouvement sensiblement en translation du galet mobile 31, dans une direction D sensiblement perpendiculaire au conduit 20, de sorte à occuper une première position extrême dans laquelle il vient écraser le conduit 20 et une seconde position extrême dans laquelle il relâche le conduit 20. Le galet mobile 31 est de préférence disposé dans un dispositif de guidage afin de guider son mouvement de translation entre ses deux positions explicitées ci-dessus tout en assurant son maintien au sein du corps principal de la pièce à mains. Enfin, une batterie 39 rechargeable est agencée dans le corps principal de la pièce à main pour alimenter le moteur 35.

Le pompage mis en œuvre par le dispositif décrit ci-dessus est tel qu'il doit permettre l'acheminement de la solution d'irrigation à un débit suffisant, par exemple au moins 4 ml/min, voire au moins 6 ml/min, de préférence entre 6 et 10 ml/min selon ce mode de réalisation. En variante, ce débit pourrait prendre toute autre valeur inférieure ou égale à 10 ml/min. Ce débit pourrait être réglable par le dentiste par l'intermédiaire d'un dispositif de réglage du débit. Le dispositif de pompage ainsi décrit présente l'avantage d'une grande simplicité, d'un faible encombrement, et d'un coût réduit. Cet ensemble formant le dispositif de pompage est de plus facile à remplacer, éventuellement par un dentiste dans son cabinet, ce qui simplifie les opérations d'entretien de la pièce à main. Pour cela, une trappe peut être prévue sur la surface de la pièce à main, au niveau du dispositif de pompage, pour avoir accès à ces composants. Cette trappe peut par exemple être aménagée au niveau de la surface de la pièce à main servant d'appui rigide 32. En variante, toute autre pompe peut être implémentée.

La mise en route du moteur 35 d'irrigation est réalisée par l'intermédiaire d'au moins un bouton 40 de commande. Dans ce mode de réalisation, deux boutons 40 de commande sont surmoulés dans la coque du corps principal de la pièce à main, comme cela est visible sur les figures 12 et 13. La réalisation de ces boutons par surmoulage présente l'avantage de garantir l'étanchéité. Naturellement, tout autre type de bouton d'actionnement peut convenir. Comme cela est particulièrement visible sur la figure 12, chaque bouton 40 permet par l'intermédiaire de peaux en matériau souple d'agir sur des contacteurs 41. Une pression sur un bouton 40 permet ainsi d'induire un contact électrique par l'intermédiaire de ces contacteurs 41.

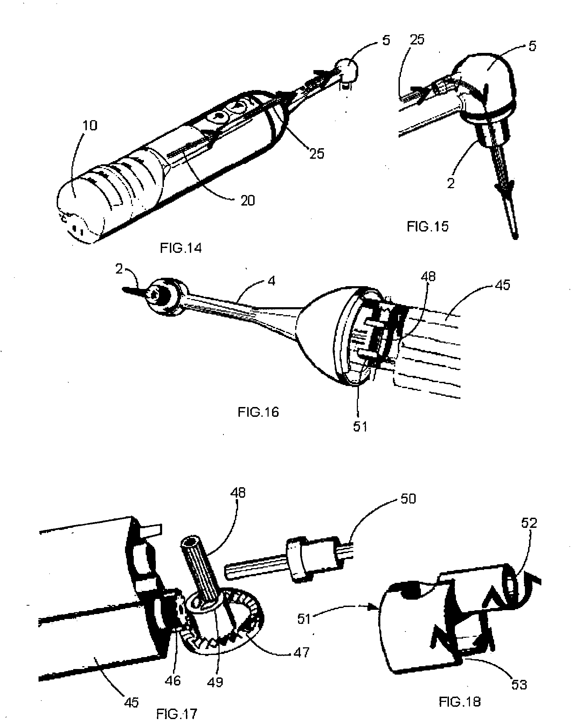

Comme cela est illustré par les figures 14 et 15, la pièce à main comprend un circuit d'irrigation qui permet de conduire la solution d'irrigation depuis le réservoir 10 positionné vers son extrémité arrière jusqu'à son embout 2 au niveau de son extrémité avant. Pour cela, le conduit 20 mentionné précédemment est ensuite prolongé vers l'avant par un autre conduit 25 qui prolonge la conduite de la solution d'irrigation jusqu'à la tête 5 de la pièce à main. Une partie de ce conduit 25 se trouve fixée sur la surface extérieure de la pièce à main au niveau du bras 4. En variante, elle pourrait être intégrée au sein de ce bras, en utilisant un bras de diamètre légèrement supérieur. Au niveau de la tête 5 de la pièce à main, un tuyau permet de guider la solution d'irrigation vers un dispositif de connexion pour un embout 2, selon une courbe formant un quart de tour lui permettant d'atteindre en sortie une direction sensiblement perpendiculaire à la direction longitudinale. Selon ce mode de réalisation, l'embout 2 est creux et permet de guider la solution d'irrigation en son sein, sur au moins une partie de sa longueur, pour lui permettre ainsi de pénétrer en sortie directement dans le canal dentaire à irriguer. En variante, la solution d'irrigation pourrait être conduite différemment vers un canal, par exemple en s'écoulant non plus à l'intérieur de l'embout mais sur sa surface extérieure, et/ou être guidée de manière au moins partiellement indépendante de l'embout 2, en étant par exemple guidée par l'embout sur une partie seulement de sa longueur, voire par l'intermédiaire d'un tuyau supplémentaire distinct de l'embout, sensiblement parallèle à celui-ci.

La pièce à main selon le mode de réalisation de l'invention met de plus en œuvre une seconde fonction importante d'agitation, qui consiste en une mise en mouvement de l'embout 2 qui permet ainsi l'agitation de la solution d'irrigation diffusé dans le canal dentaire. La combinaison des deux fonctions dans le même appareil est avantageuse puisqu'elle permet une action combinée : la solution d'irrigation constamment renouvelée permet une irrigation optimale et son agitation constante et simultanée permet son action immédiate optimale. Ce cumul des actions permet d'atteindre un résultat bien meilleur que celui obtenu avec les solutions de l'état de la technique qui séparent ces actions.

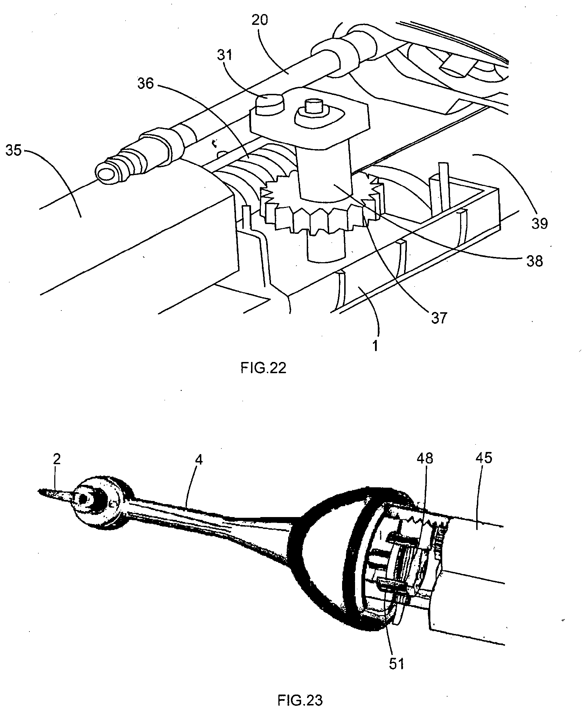

Cette fonction d'agitation est mise en œuvre à partir d'un dispositif d'agitation comprenant un second moteur 45, que nous appellerons moteur d'agitation, visible sur les figures 16 et 23, positionné en partie avant du corps principal de la pièce à main, qui coopère avec un mécanisme de liaison jusqu'au dispositif de connexion sous la tête 5 de la pièce à main, de sorte à pouvoir transmettre un mouvement à un embout 2 fixé sur cette tête par l'intermédiaire du dispositif de connexion.

La figure 17 illustre plus précisément le mécanisme de liaison du dispositif d'agitation. Le moteur 45 agit d'abord sur une première roue 46 qui coopère avec une seconde roue 47, mise en rotation selon un axe sensiblement perpendiculaire à la direction longitudinale. Cette seconde roue 47 comprend un axe 48 s'étendant parallèlement à son axe de rotation qui forme un épaulement 49, qui coopère avec un axe longitudinal 50 qui s'étend selon une direction sensiblement parallèle à l'axe de la pièce à main, au sein de son bras 4, jusqu'à la tête 5 de la pièce à main. Pour cette coopération, l'extrémité arrière de l'axe longitudinal 50 est reliée à l'épaulement par un composant de liaison 51, représenté sur la figure 18, qui comprend un logement 52 pour recevoir l'extrémité arrière de l'axe 50 et une partie de liaison 53 pour sa fixation sur l'épaulement 49. Cette seconde roue 47 avec son axe 48 et l'épaulement 49 forme ainsi une roue crantée asymétrique, qui permet d'induire un mouvement de balancier à l'axe 50.

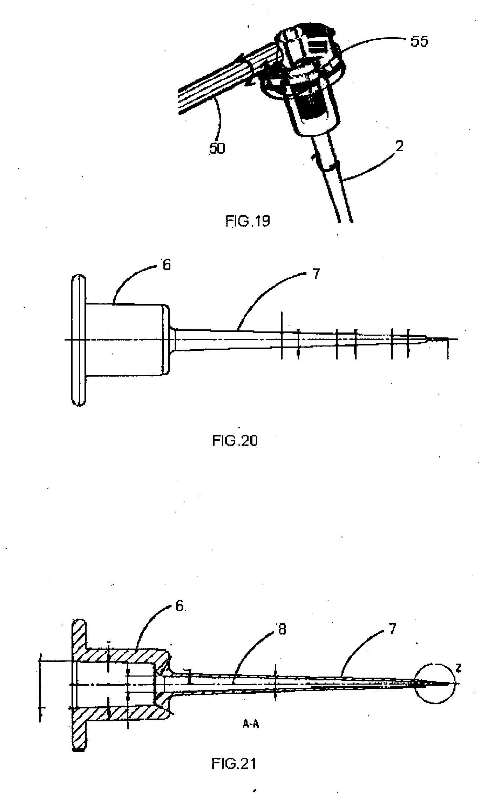

La figure 19 illustre la partie avant du dispositif d'agitation, au niveau de la tête 5 de la pièce à main. Elle comprend un composant 55 mobile en rotation selon un axe sensiblement perpendiculaire à l'axe 50, relié à l'extrémité avant de cet axe 50 par un téton d'entraînement. Les balanciers de l'axe 50 sont transmis au composant 55 qui effectuent des mouvements de rotation aller-retour dans un sens puis un autre. Selon le mode de réalisation, l'amplitude du balancier permet au composant d'atteindre une amplitude de rotation sur au moins 90°, plus ou moins 45° par rapport à une position centrale, et de préférence au moins 270°, par exemple environ un tour complet. En variante, cette amplitude ou débattement angulaire peut prendre toute autre valeur, même très inférieure, par exemple inférieure à 20°. Dans sa partie basse, ce composant 55 comprend un dispositif de connexion qui permet une liaison amovible avec un embout 2, lui permettant ainsi une mise en rotation pour remplir la fonction d'agitation. Selon le mode de réalisation, la vitesse de rotation est choisie entre 2500 et 4000 mouvements par minute, par exemple autour de 3120 allers retours par minute. Cette agitation est donc éloignée du principe d'agitation ultrasonique souvent implémenté dans l'état de la technique. En variante, d'autres types de mouvement sont possibles, comme des mouvements en translation, éventuellement combinés avec des rotations. Ainsi, l'embout 2 est mis en mouvement relativement à la pièce à main, notamment relativement à son corps principal 3 qui peut servir de référentiel. Cette mise en mouvement est de préférence une rotation, et avantageusement une succession de rotations dans un sens et dans l'autre, mais éventuellement une autre forme de mouvement. Dans tous les cas, nous entendons par mise en mouvement un déplacement réel de l'embout relativement à la pièce à main, non une vibration de l'ensemble. De plus, cette mise en mouvement concerne avantageusement l'ensemble de l'embout.

Dans le mode de réalisation décrit, une batterie 49 rechargeable est utilisée et implémentée au sein du corps principal de la pièce à main. Dans cette réalisation, la pièce à main est équipée d'un dispositif de recharge de cette batterie, aménagée en partie arrière et prévue pour coopérer avec un socle support qui remplit de plus une fonction de recharge de la batterie. La pièce à main se présente ainsi comme un instrument sans fil particulièrement facile à manipuler. En variante, la pièce à main peut comprendre un logement pour des piles électriques, ou aucune alimentation interne, mais un simple connecteur pour une liaison avec une source électrique externe.

Selon le mode de réalisation, deux boutons 40 de commande sont prévus pour atteindre les différents modes de fonctionnement suivants :
- dispositif d'agitation déclenché de manière combinée et simultanée avec le dispositif d'irrigation, ou
- le dispositif d'irrigation seul est mis en route, ou
- le dispositif d'agitation seul est mis en route.

Dans tous ces modes, la pièce à main nécessite la pression continue sur le (ou les) bouton pour son fonctionnement, elle s'arrête dès que cette pression est relâchée. En variante, l'irrigation peut se faire sous contrôle permanent d'un bouton, l'agitation nécessitant au contraire une double pression pour la mise en route et l'arrêt.

Comme cela a été abordé précédemment, l'embout 2 est relié en partie inférieure de la tête 5 par un dispositif de connexion. Cette connexion amovible peut se faire par une fixation vissée, clipée ou emmanchée à force. Ainsi, l'embout 2 est à usage unique et changé à chaque utilisation. Cette connexion mécanique comprend de plus un moyen d'étanchéité.

L'embout 2 peut présenter une géométrie désaxée ou asymétrique, qui augmente son effet dans le canal lors de sa rotation. Il se présente dans un matériau flexible, de sorte à amplifier aussi son effet lors de sa rotation. De préférence, le matériau choisi représente un compromis entre une rigidité suffisante pour pouvoir être placé dans un canal sans risque de plier sa pointe ni de la casser, et une flexibilité et/ou souplesse et/ou élasticité suffisante pour pouvoir s'adapter à l'anatomie canalaire qui présente souvent des courbures, et pouvoir être animé dans le canal sans risque de le fracturer ni de créer de dégât sur les parois radiculaires. Pour cela, un matériau plastique, de grade médical, formé intégralement par injection est avantageux.

En variante, l'embout pourrait être totalement ou en partie en métal, se présenter par exemple comme une combinaison de plastique injecté sur une partie métallique, avec une technologie de surmoulage, ou par tout autre assemblage comme à base de collage par exemple. La partie métallique pourrait par exemple former la partie centrale de l'embout, et être recouverte par une couche extérieure de plastique qui protégerait les parois du canal. En variante supplémentaire, la partie haute de l'embout, destinée à la connexion avec la pièce à main, pourrait se trouver formée en plastique injectée, alors que la partie basse pourrait être formée par un tuyau plastique extrudé.

Les figures 20 et 21 représentent un embout 2 selon un mode de réalisation de l'invention. Cet embout 2 comprend une partie de liaison 6 avec un élément de connexion complémentaire du dispositif de connexion prévu sur la tête 5 de la pièce à main. Cette partie de liaison 6 présente une section sensiblement circulaire, de diamètre inférieur ou égal à 5 mm, voire 3 mm, pour obtenir un faible encombrement. Ensuite, l'embout 2 comprend une partie basse de type aiguille 7, destinée à pénétrer au sein d'un canal dentaire. Cette aiguille présente une forme conique, d'angle d'environ 5 ou 6 degrés. Elle présente une longueur comprise entre 2 et 3 cm. Son extrémité inférieure, la plus étroite, présente un diamètre inférieur ou égal à 0.6 mm, voire 0.3 mm. Cette aiguille 7 est creuse sur au moins une partie de sa longueur, pour former un conduit 8 intérieur de guidage final de la solution d'irrigation jusque dans un canal dentaire, comme cela a été mentionné précédemment. Sa surface extérieure peut être lisse ou présenter des reliefs, comme des nervures par exemple pour augmenter l'agitation de la solution d'irrigation, ou des picots ou une nervure hélicoïdale pour un frottement peu agressif. En variante, ces reliefs peuvent être formés par un simple grainage chimique de l'empreinte du moule formant la surface extérieure de l'embout, qui serait alors légèrement abrasif.

Selon une variante de réalisation, l'aiguille 7 de l'embout 2 présente une zone fusible qui lui permet de casser en cas d'effort trop important, comme une courbure trop forte, au niveau de cette zone fusible pour éviter qu'une partie trop petite vers on extrémité casse et reste involontairement bloquée au sein d'un canal dentaire.

Les figures 25a à 25c illustrent une autre variante d'un embout 62, comprenant une aiguille 67 en métal comprenant une première partie de diamètre important, par exemple entre x et y mm (à compléter), terminée par une seconde partie finale beaucoup plus fine. L'aiguille est aussi traversée par un conduit, non représenté, pour la distribution de la solution d'irrigation. La première partie est de plus dotée d'ailettes 69. L'embout 62 comprend de plus une partie de liaison 66 dotée d'une ouverture 61 pour former la partie femelle d'une liaison de type baïonnette. En complément, la tête 5 de la pièce à main est dotée dans sa partie inférieure d'un élément de connexion complémentaire, pour la mise en œuvre de cette liaison de type baïonnette. En variante, la fixation peut être mise en œuvre par tout autre moyen, comme un simple vissage. Cette fixation peut aussi comprendre un léger désaxage pour amplifier le mouvement lors de sa rotation.

Finalement, la pièce à main selon l'invention présente les avantages suivants :
- elle est légère, ergonomique, conviviale, fonctionne avec de simples boutons selon une approche ambidextre ;
- elle ne coopère pas avec des tuyaux gênants, est donc facile à manipuler ;
- elle combine plusieurs fonctions, ne nécessite pas des opérations complémentaires dans une phase distincte avec des outils supplémentaires.

## Revendications

1. Pièce à main (1) pour traitement endodontique, **caractérisée en ce qu'**elle comprend un dispositif d'irrigation comprenant un réservoir (10) pour contenir une réserve de solution d'irrigation et un dispositif de pompage et d'éjection permettant de conduire ladite solution d'irrigation depuis le réservoir (10) jusqu'à une tête (5) en vue de son éjection vers un canal dentaire, et **en ce qu'**elle comprend un dispositif d'agitation permettant de mettre en mouvement un embout (2) induisant un déplacement réel d'un tel embout (2) relativement à la pièce à main (1) et non une vibration de l'ensemble, ledit embout (2) étant destiné à pénétrer au sein d'un canal dentaire pour favoriser l'action de la solution d'irrigation.

2. Pièce à main (1) selon la revendication précédente, **caractérisée en ce qu'**elle comprend un corps principal (3) intégrant un premier moteur (35) du dispositif d'irrigation et un second moteur (45) du dispositif d'agitation.

3. Pièce à main (1) selon la revendication précédente, **caractérisée en ce que** le dispositif d'irrigation comprend un dispositif de pompage mis en mouvement par le premier moteur (35) d'irrigation, et au moins un conduit (20, 25) pour conduire une solution d'irrigation vers une sortie de la pièce à main.

4. Pièce à main (1) selon l'une des revendications précédentes, **caractérisée en ce que** le réservoir (10) est amovible, et comprend tout ou partie des éléments suivants :
- Une trappe (16) de remplissage ; et/ou
- Une partie de tuyau comprise au sein du réservoir et associée à un poids (19) pour garantir son positionnement au sein d'une solution d'irrigation dans toutes les orientations de la pièce à main ; et/ou
- Des graduations (15) pour visualiser la quantité de solution d'irrigation présente dans le réservoir (10) ; et/ou
- Une poche souple (60) déformable contenant la solution d'irrigation.

5. Pièce à main (1) pour traitement endodontique selon la revendication 3 ou 4, **caractérisée en ce qu'**elle comprend un galet mobile (31) entre une première position dans laquelle il presse un conduit (20) déformable de sorte à induire l'éjection de la solution d'irrigation qu'il contient et une seconde position dans laquelle il ne presse pas le conduit (20), qui génère un phénomène d'aspiration de la solution d'irrigation depuis le réservoir (10) lorsqu'il reprend sa forme initiale après avoir été pressé par le galet mobile (31).

6. Pièce à main (1) selon la revendication précédente, **caractérisée en ce que** le premier moteur (35) d'irrigation agit sur une roue (37) comprenant un axe (38) excentré qui coopère avec le galet mobile (31) pour le positionner successivement dans sa première et sa seconde position.

7. Pièce à main (1) selon l'une des revendications précédentes, **caractérisée en ce qu'**elle comprend un conduit (25) apte à guider une solution d'irrigation jusqu'à une tête (5) et un dispositif de connexion avec un embout (2) disposé au niveau de cette tête.

8. Pièce à main (1) selon l'une des revendications précédentes, **caractérisée en ce que** le dispositif d'agitation comprend un second moteur (45) d'agitation, un mécanisme de liaison (47, 48, 49, 51) entre ce second moteur et un dispositif de connexion au niveau d'une tête (5) de la pièce à main pour pouvoir fixer et mettre en mouvement un embout (2) relié à la pièce à main.

9. Pièce à main (1) selon la revendication précédente, **caractérisée en ce que** le mécanisme de liaison comprend au moins une roue (48) qui agit sur un axe (50) qui s'étend dans un bras (4) de la pièce à main jusqu'à la tête (5) de sorte que son extrémité avant effectue des balanciers aptes à mettre en rotation un embout (2) relié à la pièce à main.

10. Pièce à main (1) selon la revendication 8 ou 9, **caractérisée en ce que** le dispositif d'agitation induit un mouvement de rotation alterné dans un sens puis un autre selon un débattement angulaire au moins égal à 90°, voir 270°, d'un embout (2) relié à la pièce à main.

11. Pièce à main (1) selon l'une des revendications 8 à 10, **caractérisée en ce que** le dispositif d'agitation induit un mouvement de rotation d'un embout (2) à une vitesse comprise entre 2500 et 4000 mouvements par minute.

12. Pièce à main (1) selon l'une des revendications précédentes, **caractérisée en ce qu'**elle comprend au moins une batterie (49) rechargeable, agencée dans un corps principal (3) et reliée à un moteur (35) d'irrigation et/ou à un moteur (45) d'agitation.

13. Pièce à main (1) selon l'une des revendications précédentes, **caractérisée en ce qu'**elle comprend au moins un bouton (40) de commande surmoulé sur un corps principal (3) de la pièce à main.

14. Pièce à main (1) selon l'une des revendications précédentes, **caractérisée en ce qu'**elle comprend un embout (2) amovible, au moins partiellement en matériau plastique ou en métal.

15. Pièce à main (1) selon la revendication précédente, **caractérisée en ce que** l'embout (2) est creux sur au moins une partie de sa longueur de sorte à pouvoir former un conduit (8) pour une solution d'irrigation provenant d'un réservoir (10) de la pièce à main.

## Patentansprüche

1. Handstück (1) für eine endodontische Behandlung, **dadurch gekennzeichnet, dass** es eine Spülvorrichtung, die einen Behälter (10) zur Aufnahme einer Spüllösung umfasst, und eine Pump- und Ausstoßvorrichtung, die es ermöglicht, die Spüllösung aus einem Behälter (10) bis zu einem Kopf (5) zum Zwecke ihres Ausstoßens in Richtung eines Zahnkanals zu leiten, umfasst, und dadurch, dass es eine Bewegungsvorrichtung umfasst, die es ermöglicht, ein Endstück (2) in Bewegung zu versetzen, wobei sie eine tatsächliche Verlagerung eines solchen Endstücks (2) relativ zu dem Handstück (1) und nicht eine Vibration des Ganzen hervorruft, wobei das Endstück (2) dazu bestimmt ist, ins Innere eines Zahnkanals einzudringen, um die Wirkung der Spüllösung zu fördern.

2. Handstück (1) nach dem vorhergehenden Anspruch, **dadurch gekennzeichnet, dass** es einen Hauptkörper (3) umfasst, in den ein erster Motor (35) der Spülvorrichtung und ein zweiter Motor (45) der Bewegungsvorrichtung integriert sind.

3. Handstück (1) nach dem vorhergehenden Anspruch, **dadurch gekennzeichnet, dass** die Spülvorrichtung eine Pumpvorrichtung, die von dem ersten Spülmotor (35) in Bewegung versetzt wird, und wenigstens eine Leitung (20, 25) zum Leiten einer Spüllösung zu einem Ausgang des Handstücks umfasst.

4. Handstück (1) nach einem der vorhergehenden Ansprüche, **dadurch gekennzeichnet, dass** der Behälter (10) lösbar ist und alle folgenden Elemente oder einige davon umfasst:
- einen Verschluss (16) zum Nachfüllen; und/oder
- einen Rohrabschnitt, der im Inneren des Behälters enthalten ist und mit einem Gewicht (19) verbunden ist, um seine Positionierung innerhalb einer Spüllösung bei allen Ausrichtungen des Handstücks zu garantieren; und/oder
- Teilstriche (15) zum Anzeigen der Menge an Spüllösung, die im Behälter (10) vorhanden ist; und/oder
- einen verformbaren flexiblen Beutel (60), der die Spüllösung enthält.

5. Handstück (1) für eine endodontische Behandlung nach Anspruch 3 oder 4, **dadurch gekennzeichnet, dass** es ein Druckstück (31) umfasst, das zwischen einer ersten Position, in welcher es eine verformbare Leitung (20) derart zusammendrückt, dass das Ausstoßen der darin enthaltenen Spüllösung hervorgerufen wird, und einer zweiten Position, in welcher es die Leitung (20) nicht zusammendrückt, beweglich ist, was einen Vorgang der Ansaugung der Spüllösung aus dem Behälter (10) bewirkt, wenn die Leitung, nachdem sie von dem beweglichen Druckstück (31) zusammengedrückt wurde, wieder ihre ursprüngliche Form annimmt.

6. Handstück (1) nach dem vorhergehenden Anspruch, **dadurch gekennzeichnet, dass** der erste Spülmotor (35) auf ein Rad (37) einwirkt, das eine exzentrische Achse (38) umfasst, welche mit dem beweglichen Druckstück (31) zusammenwirkt, um es nacheinander in seiner ersten und seiner zweiten Position zu positionieren.

7. Handstück (1) nach einem der vorhergehenden Ansprüche, **dadurch gekennzeichnet, dass** es eine Leitung (25), die geeignet ist, eine Spüllösung bis zu einem Kopf (5) zu leiten, und eine Anschlussvorrichtung für ein an diesem Kopf angeordnetes Endstück (2) umfasst.

8. Handstück (1) nach einem der vorhergehenden Ansprüche, **dadurch gekennzeichnet, dass** die Bewegungsvorrichtung einen zweiten Bewegungsmotor (45), einen Verbindungsmechanismus (47, 48, 49, 51) zwischen diesem zweiten Motor und eine Anschlussvorrichtung an einem Kopf (5) des Handstücks, um ein mit dem Handstück verbundenes Endstück (2) befestigen und in Bewegung versetzen zu können, umfasst.

9. Handstück (1) nach dem vorhergehenden Anspruch, **dadurch gekennzeichnet, dass** der Verbindungsmechanismus wenigstens ein Rad (48) umfasst, welches auf eine Achse (50) einwirkt, welche sich in einem Arm (4) des Handstücks bis zu einem Kopf (5) erstreckt, derart, dass ihr vorderes Ende auf Schwinghebel einwirkt, die geeignet sind, ein mit dem Handstück verbundenes Endstück (2) in Rotation zu versetzen.

10. Handstück (1) nach Anspruch 8 oder 9, **dadurch gekennzeichnet, dass** die Bewegungsvorrichtung eine Rotationsbewegung eines mit dem Handstück verbundenen Endstücks (2) abwechselnd in der einen und der anderen Richtung mit einer Winkelauslenkung, die wenigstens 90° oder sogar 270° beträgt, hervorruft.

11. Handstück (1) nach einem der Ansprüche 8 bis 10, **dadurch gekennzeichnet, dass** die Bewegungsvorrichtung eine Rotationsbewegung eines Endstücks (2) mit einer Geschwindigkeit hervorruft, die zwischen 2500 und 4000 Bewegungen pro Minute liegt.

12. Handstück (1) nach einem der vorhergehenden Ansprüche, **dadurch gekennzeichnet, dass** es wenigstens eine wiederaufladbare Batterie (49) umfasst, die in einem Hauptkörper (3) angeordnet ist und mit einem Spülmotor (35) und/oder einem Bewegungsmotor (45) verbunden ist.

13. Handstück (1) nach einem der vorhergehenden Ansprüche, **dadurch gekennzeichnet, dass** es wenigstens einen Bedienschalter (40) umfasst, der auf einen Hauptkörper (3) des Handstücks aufgeformt ist.

14. Handstück (1) nach einem der vorhergehenden Ansprüche, **dadurch gekennzeichnet, dass** es ein lösbares Endstück (2) umfasst, das wenigstens teilweise aus Kunststoffmaterial oder aus Metall besteht.

15. Handstück (1) nach dem vorhergehenden Anspruch, **dadurch gekennzeichnet, dass** das Endstück (2) auf wenigstens einem Teil seiner Länge hohl ist, so dass es eine Leitung (8) für eine Spüllösung bilden kann, die aus einem Behälter (10) des Handstücks stammt.

## Claims

1. Handpiece (1) for endodontic treatment, **characterized in that** it comprises an irrigation device comprising a reservoir (10) to contain a stock of irrigation solution and a pumping and ejecting device for conveying said irrigation solution from the reservoir (10) to a head (5) for the purpose of ejecting the solution into a root canal, and **in that** it comprises an agitator device for setting in motion an endpiece (2) inducing a genuine movement of the endpiece (2) relative to the handpiece (1) and not a vibration of the assembly, said endpiece (2) being intended to penetrate inside a root canal in order to promote the action of the irrigation solution.

2. Handpiece (1) according to the preceding claim, **characterized in that** it comprises a main body (3) incorporating a first motor (35) for the irrigation device and a second motor (45) for the agitator device.

3. Handpiece (1) according to the preceding claim, **characterized in that** the irrigation device comprises a pumping device set in motion by the first motor (35) for irrigation, and at least one conduit (20, 25) for conveying an irrigation solution to an outlet of the handpiece.

4. Handpiece (1) according to one of the preceding claims, **characterized in that** the reservoir (10) is removable and comprises all or some of the following elements:
- a filling hatch (16); and/or
- a tube part arranged inside the reservoir and connected to a weight (19) in order to guarantee its positioning within an irrigation solution in all orientations of the handpiece; and/or
- graduations (15) for visualizing the quantity of irrigation solution present in the reservoir (10); and/or
- a deformable flexible pouch (60) containing the irrigation solution.

5. Handpiece (1) for endodontic treatment according to Claim 3 or 4, **characterized in that** it comprises a roller (31) movable between a first position, in which it presses a deformable conduit (20) so as to induce the ejection of the irrigation solution that the latter contains, and a second position, in which it does not press the conduit (20), which generates a phenomenon of aspiration of the irrigation solution from the reservoir (10) when it recovers its initial shape after it has been pressed by the movable roller (31).

6. Handpiece (1) according to the preceding claim, **characterized in that** the first motor (35) for irrigation acts on a wheel (37) comprising an eccentric shaft (38) which cooperates with the movable roller (31) in order to position the latter successively in its first position and second position.

7. Handpiece (1) according to one of the preceding claims, **characterized in that** it comprises a conduit (25) for guiding an irrigation solution to a head (5), and a device for connection to an endpiece (2), arranged in the area of this head.

8. Handpiece (1) according to one of the preceding claims, **characterized in that** the agitator device comprises a second motor (45) for agitation, and a joining mechanism (47, 48, 49, 51) between this second motor and a connection device in the area of a head (5) of the handpiece in order to be able to fix and set in motion an endpiece (2) connected to the handpiece.

9. Handpiece (1) according to the preceding claim, **characterized in that** the joining mechanism comprises at least one wheel (48) which acts on a shaft (50) extending through an arm (4) of the handpiece as far as the head (5), such that its front end effects rocking movements able to set in rotation an endpiece (2) connected to the handpiece.

10. Handpiece (1) according to Claim 8 or 9, **characterized in that** the agitator device induces an alternating movement of rotation in one direction then another, with an angular clearance at least equal to 90°, even 270°, of an endpiece (2) connected to the handpiece.

11. Handpiece (1) according to one of Claims 8 to 10, **characterized in that** the agitator device induces a movement of rotation of an endpiece (2) at a speed of between 2,500 and 4,000 movements per minute.

12. Handpiece (1) according to one of the preceding claims, **characterized in that** it comprises at least one rechargeable battery (49) arranged in a main body (3) and connected to a motor (35) for irrigation and/or to a motor (45) for agitation.

13. Handpiece (1) according to one of the preceding claims, **characterized in that** it comprises at least one control button (40) overmoulded on a main body (3) of the handpiece.

14. Handpiece (1) according to one of the preceding claims, **characterized in that** it comprises a removable endpiece (2), made at least partially of plastic or of metal.

15. Handpiece (1) according to the preceding claim, **characterized in that** the endpiece (2) is hollow along at least part of its length, so as to be able to form a conduit (8) for an irrigation solution coming from a reservoir (10) of the handpiece.
